# EUROPEAN PATENT APPLICATION

(11) **EP 2 347 938 A1**
(43) Date of publication of application: **27.07.2011**
(21) Application number: 10151214.3
(22) Date of filing: 20.01.2010
(51) Int. Cl.: B60R 21/215

(54) **Method of Manufacturing a Trim Part and Trim Part, in particular for an Automobile**

(71) Applicant: International Automotive Components Group GmbH, 47804 Krefeld (DE)
(72) Inventor: Lundin, Peter, 54191, Skovde (SE)
(74) Representative: Liesegang, Eva

(57) **Abstract**

The invention relates to a method of manufacturing a trim part, in particular a trim part of a vehicle, comprising the steps of: providing a carrier (10) having an opening (12) formed therein; placing a sheet of material (14) across the opening (12) of the carrier; placing a component (16) to be attached to the carrier (10) on a first side of the carrier (10); joining the carrier (10), the sheet of material (14) and the component (16) in one processing step thereby sealing the opening (12) of the carrier (10); and applying a cover layer (36) to a second side of the carrier (10), the second side being opposite to the first side. The invention also relates to a trim part, which basically is manufactured as described above.

## Description

### Field of the Invention

The invention relates to a method of manufacturing a trim part and trim part, in particular for an automobile.

### Background of the Invention

Many plastic trim parts, for example for use in motor vehicles, are manufactured with a multi-layered structure, comprising a thermoplastic carrier, covered by an intermediate layer of soft foam and a surface layer which may e.g. consist of leather, fabric or plastic skin, for example. Multi-layered structures allow simple manufacture of interior trim parts, which can have a pleasant optical appearance as well as good haptic properties. If needed, the thermoplastic carrier can be molded with one or more holes that will be covered by the intermediate foam layer and the surface layer. This technology is known as "open carrier concept". It is used for example in an instrument panel of an automobile to provide a carrier with a through-opening for a passenger airbag.

The foam layer and the surface layer can be applied to the carrier by back-foaming, where the carrier is placed in a foaming tool first half and the surface layer is placed in a foaming tool second half wherein an expandable material, such as PU (polyurethane), is introduced into the foaming tool between the carrier and the surface layer and is expanded so as to form the intermediate soft-foam layer,

This technology bears the risk that foam will leak through the opening in the carrier to the back, opposite to where the surface covering should be. This leads to problems with contamination of the back of the carrier and components possibly attached to the carrier's back. There even is the risk that the foam leaks to the surface of the cover layer so that the appearance of the whole trim part would be spoiled and the trim part would have to be discarded.

One solution to this problem would be to manufacture the opening in the carrier only after the foam layer has been applied, e.g. by milling an opening into the carrier. This, however, would require extra processing steps. Moreover, additional thermoplastic material has to be provided which will later be removed from the opening, hence resulting in undesirable waste material and debris. From a processing viewpoint, it would be clearly advantageous to provide the opening at the same time when molding the carrier so as to give the carrier its final shape at the time of manufacturing the carrier.

Document US 2007/0052210 A1 describes an interior trim part for covering an airbag which may include a two-dimensional carrier, a surface décor and a foamed intermediate layer. A through-opening for the airbag is recessed in the carrier, and an inlay covering the through opening is integrated into the intermediate layer, such that the inlay projects beyond an edge of the through-opening on one side and, in an overlapping region of the inlay and the carrier, serves as a hinge for an airbag flap formed by the surface décor, the intermediate layer and the inlay. US 2007/0052210 A1 also describes that the inlay can be provided with a sealing layer on its back wherein the inlay including the sealing layer are introduced into a cavity of a back-foaming tool between the surface décor and the carrier such that the through-opening is covered. The sealing layer is fixed to the inlay and can be fixed to the carrier, e.g. by gluing. In order to ensure a connection of the foam of the intermediate layer with the carrier and thus connection of the inlay to the carrier, the sealing layer may be provided with recesses in the overlapping region, the recesses allowing the foam to penetrate.

The design described in US 2007/0052210 A1 as well as other special sealing arrangements used in the art require that a sealing foil is attached to an inlay and/or to the carrier which is time consuming manual work, normally using glue or tape. The same holds for other sealing arrangements which might be provided in the tool.

It is an object of the present invention to provide a method of manufacturing a trim part and to provide a design for a trim part, in particular for a motor vehicle, which overcome the problems discussed above. In particular, the invention shall provide a solution for an "open carrier concept" trim part having a foam covering which avoids leakage of foam through the opening provided in the carrier during the back-foaming process.

### Summary of the Invention

This object is solved by the method of claim 1 and by providing a trim part according to claim 8.

The method of manufacturing a trim part according to the present invention comprises the steps of: providing a carrier having an opening formed therein; placing a sheet of material across the opening of the carrier; placing a component to be attached to the carrier on a first (e.g. back) side of the carrier; joining the carrier, the sheet of material and the component in one processing step thereby sealing the opening of the carrier; and applying a cover layer to a second (e.g. front) side of the carrier, the second side being opposite to the first side.

The present invention uses the fact that in many instances a further component needs to be attached to the back of the carrier in the vicinity of the opening, such as a shute channel for an airbag. The present invention uses the processing step necessary for connecting this additional component with the carrier to also attach a sealing layer, provided by the sheet of material, to the carrier, covering and sealing the opening of the carrier with the sheet of material.

In the context of the present invention, "in one processing step" means that the carrier, the sheet of material and the component are joined at substantially the same time by commonly applying e.g. heat, pressure and/or another form of energy.

Only after the carrier, the sheet of material and the component are joined, the cover layer is applied to the second (front) side of the carrier, e.g. by a back-foaming process which as such is known in the art.

In the preferred embodiment of the invention, the sheet of material is sandwiched between the carrier and the additional component wherein the carrier, the sheet of material and the component are joined by laser welding. The inventors have found that the three elements, i.e. the carrier, the sheet of material and the component, can be welded together if the intermediate sheet of material is thin enough. For laser welding, all three elements preferably should be made of the same material or of similar materials which have similar characteristics in the laser welding process. Suitable for laser welding are thermoplastics having high transparency and good absorption in the surface regions, The plastics to be welded should have sufficient polymer compatibility, low reflection coefficients and similar melting temperatures. The process allows to join hard and soft plastics.

In this embodiment, a laser beam preferably would be directed to the trim part from the side of the additional component which should be transparent or at least semi-transparent to the laser beam. The carrier should be absorbing the laser energy in order to generate heat and melt or plastify the material of both the carrier and the additional component along the path of the laser beam. Once the material is cooled and the melt is set, the welding process is completed. The intermediate sheet of material can be laser-transparent, semi-transparent or non-transparent to the laser beam. Ideally the laser weld is created by the heat generated in the laser energy absorbing material of the carrier, the generated heat also melting the contacting material of the component and the sheet of material along the path of the laser beam thus intimately joining these three elements,

The laser can be a wavelength-tunable diode laser, for example, such as a diode laser manufactured by Jenoptic Laserdiode GmbH, Jena, Germany.

The laser beam can have a power of e.g. 100 to 400 W. It can be configured to be scannable across the trim part to produce the weld seam.

In an alternative embodiment of the invention, the carrier, the sheet of material and the component can be joined by other means, such as gluing wherein e.g. two strings of glue are provided between the sheet of material and the carrier and between the sheet of material and the component, respectively. The assembly of these three elements is then joined by applying pressure and optionally applying heat in one processing step.

In the preferred embodiment of the invention, the cover layer is formed by placing the assembly comprising the joined carrier, sheet of material and component into a foaming tool first half and by placing a surface layer into a foaming tool second half. An expandable material, such as PU (polyurethane), is introduced into the foaming tool and the expandable material is expanded so as to form the cover layer by back-foaming on the second (front) side of the carrier between the assembly and the surface layer. In one embodiment, the expandable material is poured into the open tool and the tool is closed before introducing gas for expanding and foaming the expandable material.

The surface layer can be a slush skin, a vacuum formed plastic foil or another décor layer known in the art.

Optionally, an insert can be provided to cover the opening of the carrier. This insert could be connected to the sheet of material and attached to the carrier via said sheet of material.

The present invention is also directed to a trim part, in particular a trim part of a motor vehicle. The trim part comprises a carrier having an opening formed therein, a sheet of material placed across the opening of the carrier, a component attached to a first (e.g. back) side of the carrier, and a cover layer applied to a second (e.g. front) side of the carrier, the second side being opposite to the first side. The carrier, the sheet of material and the component are joined by the same means, the sheet of material sealing the opening of the carrier.

In the preferred embodiment, the sheet of material is sandwiched between the carrier and the component and the carrier, the sheet of material and the component are joined by a laser weld. In this embodiment, the material of the component preferably is transparent to a laser beam and the sheet of material is transparent or semi-transparent to the laser beam. Laser-transparency of the individual elements can be adjusted by pigmenting, for example.

If laser welding is used for joining the elements and if it is assumed that the laser beam is directed at the trim part from the side of the additional component, the thickness of the carrier will not be critical. However, the sheet of material should have a thickness sufficiently thin to allow a string of melt to be created by the laser beam in the facing surfaces of the carrier and the additional component. The melt penetrates these surfaces to a depth of e.g. 0,5 mm. The thickness of the sheet of material can be e.g. in the range of 0.05 to 0.3 mem. The component should be transparent to the laser beam and could have a thickness of e.g. about 2 to 3.5 mm. The properties of the laser beam, such as wavelength and power, will be adjusted to match different materials and material thicknesses of the carrier, sheet of material and component. The focal distance of the laser beam is adjusted to the thickness of the component penetrated by the laser beam wherein the thickness of the sheet of material might be essentially negligible. The invention is based on the recognition that the three elements can be welded together efficiently so as to avoid time-consuming manual work and to join the carrier, the additional component and the sheet of material in one processing step.

If laser welding is used, the carrier, the sheet of material and the component should be made from the same or similar material, in particular an engineering plastic, such as PP (polypropylene), ABS (acrylonitrile butadiene styrene) or polyester for example.

Instead of laser welding, other welding processes can be used, such as vibration welding. In an alternative embodiment of the invention, the carrier, the sheet of material and the component can be joined by glue.

In one embodiment of the invention, the sheet of material could be pre-treated for adjusting its adhesive properties. For example, by surface treatment and/or by adjusting the composition of the sheet of material, its surface friction can be controlled so that the sheet of material either adheres well to or releases well from the foam layer. Means for surface treatment of the sheet of material can comprise flaming, corona treatment, priming or the like.

If, for example, a PU foam is used for providing the cover layer, the sheet of material can be corona treated, either before applying it to the carrier or on the spot. Treatment on the spot would be preferred if the carrier was made e.g. from PP (polypropylene) because, in such case, a flaming process would also be applied to the carrier before foaming to assure good adhesion of the foam. If, on the other hand, a carrier and sheet of material made from ABS are chosen, no such treatment ought to be necessary.

The invention is particularly useful for covering an opening for a passenger airbag in a trim part, such as an instrument panel of a motor vehicle, where the airbag opens into the foam covering, deploying softly. In current airbag designs, sensors can be provided to disable deployment in order to avoid harm to the passengers of the vehicle. For example, the passenger airbag provided in an instrument panel will be lowered before being filled with compressed air so that a higher force is applied to the lower edge of the through-opening and so that the airbag deploys from further downwards, transitioning to further upwards. In this technology, open carriers provide the opportunity to lower the weakening line in the foam and surface layer related to the opening in the carrier, decreasing the risk of flying particles.

When the airbag deploys and starts to penetrate through the opening, the sheet of material should follow the opening of the lid covering the opening, the lid being formed by the foam layer and surface layer, optionally in combination with an insert attached to the sheet of material. In order to achieve a well-defined opening or tearing of the sheet of material, a sharp cutting edge or teeth can be provided along the periphery of the opening which cut the sheet of material or initiate a well-defined tear in the sheet of material. After the airbag has completed deployment, the foil can still cover the foam layer or can be released from the foam, according to design requirements.

### Short Description of Drawings

Further features and advantages of the invention are now described with reference to a preferred embodiment shown in the accompanying drawings, in which:
- Fig. 1: shows an assembly of a carrier, a sheet of material and an additional component used in manufacturing a trim part according to the invention;
- Fig. 2: shows the assembly of fig. 1 which is inserted into a foaming tool during a back-foaming process; and
- Fig. 3: schematically shows a process of joining three layers in a laser welding process.

### Detailed Description of Embodiment

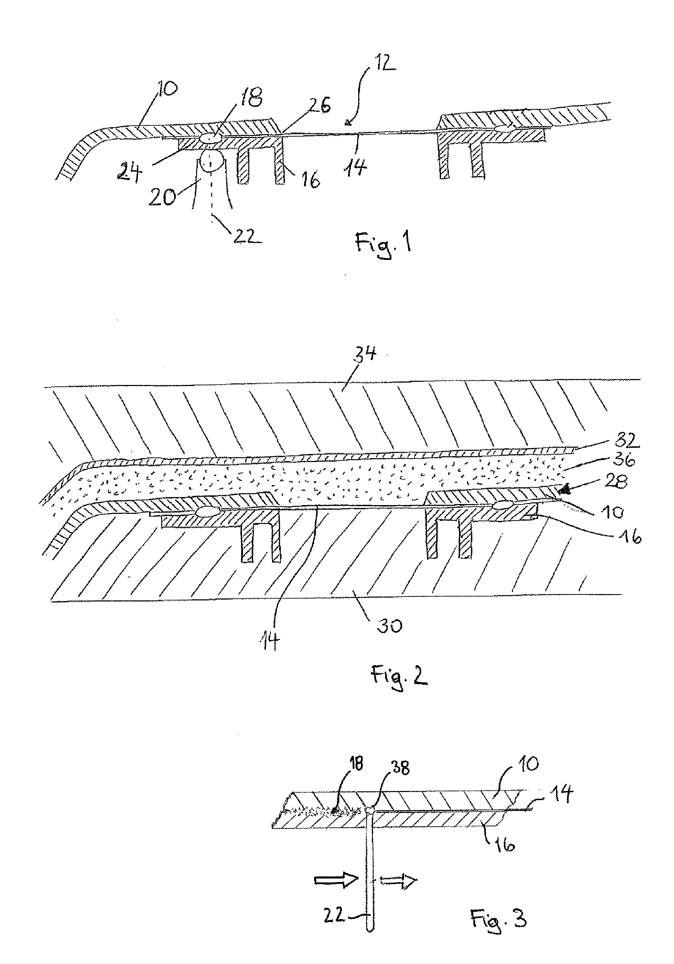

Fig. 1 shows an assembly comprising a carrier 10 having an opening or recess 12 formed therein, the opening 12 being covered with a sheet of material or insulating layer 14. In the embodiment shown in fig. 1, the carrier 10 is part of an instrument panel of a motor vehicle, and the opening 12 is provided for the passage of a passenger airbag. At the back of the carrier 10, an additional component 16, in this case a shute channel for the airbag, is provided, the component 16 surrounding the opening 12. The shute channel 16 comprises a flange 24 by which it is connected to the carrier 10.

It is to be understood that the present invention can be applied to any other kind of trim part comprising a carrier having an opening formed therein, a sheet of material for covering the opening and a component attached to the back of the carrier; the embodiment shown in figs. 1 and 2 serving as an example of the present invention only. However, in order to ease the understanding of the present invention, the following description will make reference to the "insulating layer" 14 and the "shute channel" 16, with the understanding that the invention is not limited to this component.

According to the invention, the carrier 10, the insulating layer 14 and the shute channel 16, are intimately joined by a welding seam 18 which is generated by a laser welding device 20 emitting a laser beam 22, shown only schematically in fig. 1.

The laser welding device can comprise a diode laser or any other suitable laser. The wavelength of the laser is chosen to adapt the laser beam to different materials to be processed. The laser preferably should have a laser power in the range of about 100 to 400 W and should be scannable across the trim part.

The assembly comprising the carrier 10, the insulating layer 14 and the shute channel 16 is designed in such a way that the shute channel 16 is transparent to the laser beam 22 and that the laser energy is absorbed and transformed into heat in the material of the carrier 10. The insulating layer 14 can be transparent, semi-transparent or non-transparent to the laser beam 22. Laser transparency of the elements 10, 14, 16 can be adjusted by pigmenting a resin used for forming these elements.

While the thickness of the carrier 10 is not critical to the welding process, the insulating material 14 should be relatively thin when compared to the thickness of the carrier 10 and the shute channel 16. Further, the wall thickness of the flange 24 of the shute channel 16 should be sufficiently thin to allow the laser beam 22 to penetrate without substantial heat generation. As a rule of thumb, the thickness of the insulating layer 14 is about one order of magnitude smaller than the thickness of flange 24 of the shute channel 16. Exemplary values for the thickness of the insulating layer 14 are from about 0.05 to about 0.3 mm and for the flange 24 of the shute channel are from about 2 to about 3.5 mm. The laser beam should be adjusted in such a way that the welding seam 18 penetrates into the contacting materials to a depth in the order of about 0,5 mm.

In order to achieve a reliable welding seam, the carrier 10, the sealing layer 14, and the shute channel 16 all should be manufactured from the same or similar materials, in particular an engineering plastic such as PP (polyurethane), polyester, or ABS (acrylonitrile butadiene styrene). The use of the same material for all of the components 10, 14 and 16 also has the advantage that it facilitates recycling of the materials which are intimately joined by the welding seam 18.

Fig. 1 further shows a sharp cutting edge 26 formed at the periphery of the opening 12 which cuts into the insulating layer 14 when the airbag deploys and passes through the opening 12. Additionally, small perforating teeth (not shown) could be provided along the cutting edge 26.

Fig. 2 shows the assembly 28 of the sealed carrier 10 to which the insulating layer 14 and the shute channel 16 have been attached, as shown in fig. 1. For manufacturing the complete trim part, the assembly 18 is placed in a first half 30 of a foaming tool. A surface material 32 is placed in a second half 34 of the foaming tool. The surface material 32 can be any surface décor known in the art, such as fabric, leather or a plastic skin or foil, a slush skin or the like.

A foam layer 36, also referred to as cover layer in the description and claims, is provided between the assembly 28 and the surface material 32, covering the carrier 10 and the sealing layer 14 within the opening.

The foam layer 36 can be formed by back-foaming, as known in the art. In one embodiment of a back-foaming process, the assembly 28 and the surface material 32 will be placed in their respective halves 30, 34 of the foaming tool. An expandable material, such as PU (polyurethane) will be introduced, e.g. poured into the foaming tool and the tool will be closed. Subsequently, pressurized gas can be introduced into the foaming tool so as to expand the expandable material and produce the foam layer 36, such as a PU foam layer. Without the presence of the insulating layer 14, there would be the risk that the material of the foam layer 36 penetrates through the opening 12 to the back of the carrier 28 and contaminates the shute channel 18 and other components provided on the back of the carrier. This is effectively avoided by the insulating layer 14 which is intimately joined with the carrier 10 and the shute channel 16 so that the opening of the carrier is sealed completely.

After forming the foam layer 36, the two halves 30, 34 of the foaming tool can be opened and the completed trim part can be removed.

Fig. 3 schematically shows the progress of the laser welding process wherein the same reference numbers as in the previous drawings designate the carrier 10, the insulating layer 14, the additional component 16 and the laser beam 22. In the drawing, the laser beam 22 moves in the direction of the arrows so as to progressively create the welding seam 18 where the materials of the carrier 10, the sealing layer 14 and the component 16 are intimately joined. Also a laser scanner or a fixed linear laser can be used. Then no movement of parts is needed but the rest of the process is basically as described above. As described above, the carrier 10 is made from a laser absorbing material and the component 16 is made from a laser transparent material so that a melt area 3 8 is generated where the laser beam 22 hits the carrier 10.

It should be noted that the features of the present invention, disclosed in the description, the claims and the drawings, can be relevant individually and in any combination thereof for implementing the present invention. The invention shall not be construed to be limited to the embodiments disclosed and, in particular, where certain combinations of features are described in a particular embodiment, the invention shall not be limited to said combination of features.

### Reference Numbers

- 10: carrier
- 12: opening
- 14: sheet of material / insulating layer
- 16: additional component / shute channel
- 18: welding seam
- 20: laser welding device
- 22: laser beam
- 24: flange of shute channel
- 26: cutting edge
- 28: assembly of carrier, insulating layer and shute channel
- 30: first half of foaming tool
- 32: surface material
- 34: second half of foaming tool
- 36: cover layer / foam layer
- 38: melt area

## Claims

1. Method of manufacturing a trim part, in particular a trim part of a vehicle, comprising the steps of:
providing a carrier (10) having an opening (12) formed therein;
placing a sheet of material (14) across the opening (12) of the carrier (10);
placing a component (16) to be attached to the carrier (10) on a first side of the carrier (10);
joining the carrier (10), the sheet of material (14) and the component (16) in one processing step thereby sealing the opening (12) of the carrier (10); and
applying a cover layer (36) to a second side of the carrier (10), the second side being opposite to the first side.

2. The method of claim 1 wherein the sheet of material (14) is sandwiched between the carrier (10) and the component (16).

3. The method of Claim 1 or claim 2 wherein the carrier (10), the sheet of material (14) and the component (16) are joined by laser welding.

4. The method of one claim 3 wherein the component (16) is transparent to a laser beam (22).

5. The method of claim 4 wherein the laser beam (22) has a power of 100 to 400 W.

6. The method of Claim 1 or claim 2 wherein the carrier (10), the sheet of material (14) and the component (16) are joined by gluing.

7. The method of one of the preceding claims wherein an assembly (28) comprising the joined carrier (10), sheet of material (14) and component (16) is placed in a foaming tool first half (30), a surface layer (32) is placed in a foaming tool second half (34), an expandable material is introduced into the foaming tool, and the expandable material is expanded so as to form the cover layer (36) by back-foaming on the second side of the carrier (10) between the assembly (28) and the surface layer (32).

8. A trim part, in particular a trim part of a vehicle, comprising:
a carrier (10) having an opening (12) formed therein;
a sheet of material (14) placed across the opening (12) of the carrier (10);
a component (16) attached to a first side the carrier (10); and
a cover layer (36) applied to a second side of the carrier (10), the second side being opposite to the first side;
wherein the carrier (10), the sheet of material (14) and the component (16) are joined by the same means, the sheet of material sealing the opening (12) of the carrier (10).

9. The trim part of Claim 8 wherein the sheet of material (14) is sandwiched between the carrier (10) and the component (16).

10. The trim part of claim 9 wherein the carrier (10), the sheet of material (14) and the component (16) are joined by a laser weld (18).

11. The trim part of claim 10 wherein the material of the component (16) is transparent to a laser beam (22).

12. The trim part of claim 11 wherein the sheet of material (14) is transparent or semi-transparent to the laser beam (22).

13. The trim part of Claim 8 or claim 9 wherein the carrier (10), the sheet of material (14) and the component (16) are joined by glue.

14. The trim part of one of claims 8 to 13 wherein the cover layer (36) comprises a foam layer provided between a surface layer (32) and an assembly (28) comprising the joined carrier (10), sheet of material (14) and component (16).

15. The trim part on one of claims 8 to 14 wherein the sheet of material (14) has a thickness of 0.05 to 0.3 mm and the component has a thickness of 2 to 3.5 mm.

16. The trim part of one of claims 8 to 15 wherein the carrier (10), the sheet of material (14) and the component (16) are made from the same or similar material, in particular an engineering plastic.

17. The trim part of one of claims 8 to 16 wherein the opening (12) formed in the carrier (10) is an airbag passage.

18. The trim part of one of claims 8 to 17 wherein the sheet of material (14) is pre-treated for adjusting its adhesive properties.
